# EUROPEAN PATENT APPLICATION

(11) **EP 4 621 451 A1**
(43) Date of publication of application: **24.09.2025**
(21) Application number: 23891296.8
(22) Date of filing: 22.10.2023
(51) Int. Cl.: G02B 5/22, C01G 41/00, C01G 49/02, C08K 3/20, C08L 101/00, C09K 3/00

(54) **INFRARED RADIATION-ABSORBING MATERIAL FINE PARTICLE DISPERSION LIQUID AND INFRARED RADIATION-ABSORBING MATERIAL FINE PARTICLE DISPERSION**

(30) Priority: 18.11.2022 JP 2022185064
(71) Applicant: SUMITOMO METAL MINING CO., LTD., Tokyo 105-8716 (JP)
(72) Inventor: OKADA, Mika, Tokyo 105-8716 (JP); SATO, Keiichi, Isa-shi, Kagoshima 895-2501 (JP)
(74) Representative: TBK
(86) International application number: PCT/JP2023/038112
(87) International publication number: WO 2024/106140

(57) **Abstract**

To provide an infrared radiation-absorbing material fine particle dispersion liquid and dispersion body which have high transmittance for light in the visible light region and have absorbance in the near-infrared region, and which can be adjusted to a neutral color between blue and bronze (a pale yellow-green or pale blue color in which yellowishness and bluishness are suppressed). Provided is an infrared radiation-absorbing material fine particle dispersion liquid or dispersion body comprising infrared radiation-absorbing material fine particles and iron oxyhydroxide (FeOOH) fine particles in a liquid or solid medium, wherein the infrared radiation-absorbing material fine particles are formed of composite tungsten oxide fine particles which are represented by a general formula M_{Y}WO_{Z} (where the element M is an element selected from Cs, Rb, K, Tl, In, and the like, W is tungsten, 0.001≤Y≤1.0, and 2.2≤Z≤3.0), and which have a hexagonal crystal structure, and a mass ratio between the iron oxyhydroxide fine particles and the composite tungsten oxide fine particles contained in the liquid or solid medium [iron oxyhydroxide fine particles/composite tungsten oxide fine particles] is 0.01 or more and 0.5 or less.

## Description

### TECHNICAL FIELD

The present invention relates to an improvement of an infrared radiation-absorbing material fine particle dispersion liquid and an infrared radiation-absorbing material fine particle dispersion body which have high transmittance for light in the visible light region and have absorbance in the near-infrared region, and which can be adjusted to a neutral color between blue and bronze (a pale yellow-green or pale blue color in which yellowishness and bluishness are suppressed).

### BACKGROUND ART

As a light shielding member for use in window members and the like, an infrared radiation-absorbing material fine particle dispersion body which is formed in a plate shape, a film shape, a thin film shape, and the like in which composite tungsten oxide fine particles represented by a general formula M_{Y}WO_{Z} are dispersed in a medium has been known (Patent Literature 1).

The above-described composite tungsten oxide fine particle has transmittance for light in the visible light region and has absorbance in the near-infrared region. Hence, the above-described infrared radiation-absorbing material fine particle dispersion body is favorably used in window members having solar-radiation-shielding function, and the like.

Meanwhile, the transmission color tones of many composite tungsten oxide fine particles are blue, and window members using such composite tungsten oxide fine particles also have color tones with strong bluishness. However, color tones of black and bronze having low chroma are often favored from the viewpoint of design and practicality.

In view of this, Patent Literature 2 discloses a solar-radiation-shielding material for vehicle windows in which composite tungsten oxide fine particles, titanium nitride fine particles, and iron oxide (Fe₂O₃) fine particles are mixed and dispersed in a solid medium (see Example 11 and Example 23). By adding iron oxide (Fe₂O₃) fine particles to the above-described solar-radiation-shielding material, a* and b* in the L*a*b* color system are made plus, so that the color tone of the solar-radiation-shielding material for vehicle windows can be adjusted to the bronze color side (see paragraph 0035).

### CITATION LIST

### PATENT LITERATURES

Patent Literature 1: Japanese Patent No. 4096205
Patent Literature 2: International Publication No. WO2009/054051

### SUMMARY OF THE INVENTION

### TECHNICAL PROBLEM

However, while the color tone is adjusted to a bronze color, the solar-radiation-shielding material for vehicle windows described in Patent Literature 2 has a problem that the visible light transmittance significantly decreases to 10.1% (Example 22) to 31.9% (Example 25).

Moreover, from a diversity of colors which users favor, window members of a neutral color between blue and bronze (a pale yellow-green or pale blue color in which yellowishness and bluishness are suppressed) have also been widely demanded, so that there is a problem that cannot be solved by the method described in Patent Literature 2.

The present invention has been made in view of such problems, and an object thereof is to provide an infrared radiation-absorbing material fine particle dispersion liquid and an infrared radiation-absorbing material fine particle dispersion body which have high transmittance for light in the visible light region and have absorbance in the near-infrared region, and which can be adjusted to a neutral color between blue and bronze (a pale yellow-green or pale blue color in which yellowishness and bluishness are suppressed).

### SOLUTION TO PROBLEM

To achieve the above-described object, the present inventors selected a combination of composite tungsten oxide fine particles represented by a general formula M_{Y}WO_{Z} and iron oxyhydroxide (FeOOH) fine particles, and prepared an infrared radiation-absorbing material fine particle dispersion liquid and an infrared radiation-absorbing material fine particle dispersion body by dispersing these fine particles in a medium. The present inventors then measured transmittances [UV-A (315 to 400 nm) average, visible light, and ST (solar radiation)] of the infrared radiation-absorbing material fine particle dispersion liquid and the infrared radiation-absorbing material fine particle dispersion body and evaluated a transmission color in the L*a*b* color system, while changing the mass ratio between the iron oxyhydroxide (FeOOH) fine particles and the composite tungsten oxide fine particles [that is, iron oxyhydroxide (FeOOH) fine particles/composite tungsten oxide fine particles]. As a result, when the above-described mass ratio [iron oxyhydroxide (FeOOH) fine particles/composite tungsten oxide fine particles] was set to 0.01 or more and 0.5 or less, the transmission color in the infrared radiation-absorbing material fine particle dispersion liquid evaluated in the L*a*b* color system had a* of -20 or more and 0 or less, and b* of -3.5 or more and 20 or less. Therefore, the present inventors have eventually found that an infrared radiation-absorbing material fine particle dispersion body obtained by using this infrared radiation-absorbing material fine particle dispersion liquid has high transmittance for light in the visible light region and has absorbance in the near-infrared region, and in a transmission color evaluated in the L*a*b* color system, a* becomes -20 or more and 0 or less, and b* becomes -3.0 or more and 20 or less, so that the infrared radiation-absorbing material fine particle dispersion body can be adjusted to a neutral color between blue and bronze (a pale yellow-green or pale blue color in which yellowishness and bluishness are suppressed).

The present invention has been completed based on such technical analysis and findings.

Specifically, a first invention according to the present invention is an infrared radiation-absorbing material fine particle dispersion liquid comprising infrared radiation-absorbing material fine particles and iron oxyhydroxide (FeOOH) fine particles in a liquid medium, wherein
the infrared radiation-absorbing material fine particles are formed of composite tungsten oxide fine particles which are represented by a general formula M_{Y}WO_{Z} (where the element M is one or more elements selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, 0.001≤Y≤1.0, and 2.2≤Z≤3.0), and which have a hexagonal crystal structure, and
a mass ratio between the iron oxyhydroxide (FeOOH) fine particles and the composite tungsten oxide fine particles in the liquid medium [iron oxyhydroxide (FeOOH) fine particles/composite tungsten oxide fine particles] is 0.01 or more and 0.5 or less.

In addition, a second invention according to the present invention is the infrared radiation-absorbing material fine particle dispersion liquid according to the first invention, wherein a particle size of the composite tungsten oxide fine particles is 1 nm or more and 200 nm or less,
a third invention is the infrared radiation-absorbing material fine particle dispersion liquid according to the first invention, wherein a particle size of the iron oxyhydroxide (FeOOH) fine particles is 1 nm or more and 200 nm or less,
a fourth invention is the infrared radiation-absorbing material fine particle dispersion liquid according to the first invention, wherein the liquid medium is one or a mixture of two or more selected from water, an organic solvent, a vegetable oil, a vegetable oil-derived compound, a petroleum-based solvent, an oil and/or fat, a liquid resin, and a liquid plasticizer for plastic, and
a fifth invention is the infrared radiation-absorbing material fine particle dispersion liquid according to any one of the first invention to the fourth invention, wherein when the infrared radiation-absorbing material fine particle dispersion liquid is evaluated in an L*a*b* color system, a* is -20 or more and 0 or less, and b* is -3.5 or more and 20 or less.

Next, a sixth invention according to the present invention is an infrared radiation-absorbing material fine particle dispersion body comprising infrared radiation-absorbing material fine particles and iron oxyhydroxide (FeOOH) fine particles in a solid medium, wherein
the infrared radiation-absorbing material fine particles are formed of composite tungsten oxide fine particles which are represented by a general formula M_{Y}WO_{Z} (where the element M is one or more elements selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, 0.001≤Y≤1.0, and 2.2≤Z≤3.0), and which have a hexagonal crystal structure, and
a mass ratio between the iron oxyhydroxide (FeOOH) fine particles and the composite tungsten oxide fine particles in the solid medium [iron oxyhydroxide (FeOOH) fine particles/composite tungsten oxide fine particles] is 0.01 or more and 0.5 or less.

In addition, a seventh invention according to the present invention is the infrared radiation-absorbing material fine particle dispersion body according to the sixth invention, wherein a particle size of the composite tungsten oxide fine particles is 1 nm or more and 200 nm or less,
an eighth invention is the infrared radiation-absorbing material fine particle dispersion body according to the sixth invention, wherein a particle size of the iron oxyhydroxide (FeOOH) fine particles is 1 nm or more and 200 nm or less,
a ninth invention is the infrared radiation-absorbing material fine particle dispersion body according to the sixth invention, wherein the solid medium is a resin or a metal alkoxide, and
a tenth invention is the infrared radiation-absorbing material fine particle dispersion body according to any one of the sixth invention to ninth invention, wherein when the infrared radiation-absorbing material fine particle dispersion body is evaluated in an L*a*b* color system, a* is -20 or more and 0 or less, and b* is -3.0 or more and 20 or less.

### ADVANTAGEOUS EFFECTS OF INVENTION

According to the present invention, since the mass ratio between the iron oxyhydroxide (FeOOH) fine particles and the composite tungsten oxide fine particles in the medium [iron oxyhydroxide (FeOOH) fine particles/composite tungsten oxide fine particles] is set to 0.01 or more and 0.5 or less, it becomes possible to provide an infrared radiation-absorbing material fine particle dispersion body which has high transmittance for light in the visible light region and has absorbance in the near-infrared region, and which is adjusted to a neutral color between blue and bronze (a pale yellow-green or pale blue color in which yellowishness and bluishness are suppressed).

### BEST MODES FOR PRACTICING THE INVENTION

Embodiments of the present invention will be described below in detail.

### 1. Infrared radiation-absorbing material fine particle dispersion liquid

An infrared radiation-absorbing material fine particle dispersion liquid according to the present embodiment comprises infrared radiation-absorbing material fine particles formed of composite tungsten oxide fine particles which are represented by a general formula M_{Y}WO_{Z} and which have a hexagonal crystal structure, iron oxyhydroxide (FeOOH) fine particles, a liquid medium, and an additive added as necessary, wherein the above-described infrared radiation-absorbing material fine particles and iron oxyhydroxide (FeOOH) fine particles are dispersed in the liquid medium. Hereinafter, each component will be described.

### (1) Infrared radiation-absorbing material fine particles

(1-1) The infrared radiation-absorbing material fine particles according to the present embodiment are fine particles formed of composite tungsten oxide fine particles which are represented by a general formula M_{Y}WO_{Z} (where the element M is one or more elements selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, 0.001≤Y≤1.0, and 2.2≤Z≤3.0), and which have a hexagonal crystal structure, and a preferable element M includes one or more selected from Cs, Rb, K, Tl, In, Ba, Li, Ca, Sr, Fe, and Sn, and the infrared radiation-absorbing material fine particles according to the present embodiment effectively function as an infrared radiation-absorbing component when applied to various window members and the like.

The amount Y of the element M added needs to be 0.001 or more and 1.0 or less, and is preferably near 0.33. This is because the value of Y theoretically calculated from a hexagonal crystal structure is 0.33, and favorable optical properties can be obtained with an addition amount near this value. Typical examples include Cs_{0.33}WO₃, Rb_{0.33}WO₃, K_{0.33}WO₃, Ba_{0.33}WO₃, and the like; however, when Y and Z fall under the above-described ranges, useful infrared radiation-absorbing properties can be obtained.

In addition, in the above-described composite tungsten oxide, some of oxygen may be substituted with another element, and such another element includes, for example, nitrogen, sulfur, halogen, and the like.

(1-2) The particle size of the composite tungsten oxide forming the infrared radiation-absorbing material fine particles according to the present embodiment can be selected as appropriate depending on the purpose of use of the composite tungsten oxide fine particles or the infrared radiation-absorbing material fine particle dispersion body produced using the dispersion liquid thereof, but is preferably 1 nm or more and 200 nm or less. This is because when the particle size is 200 nm or less, the composite tungsten oxide fine particles can exert strong near infrared radiation-absorbing capability, while when the particle size is 1 nm or more, the composite tungsten oxide fine particles can be industrially easily produced. Note that if the particle size is too large, exceeding 200 nm, it is not favorable because the infrared radiation-absorbing capability of the composite tungsten oxide fine particles itself attenuates.

Here, the particle size is a size of each composite tungsten oxide fine particle which is not aggregated, that is, an average value of the primary particle size, is an average particle size of the composite tungsten oxide fine particles contained in the infrared radiation-absorbing material fine particle dispersion body, which will be described later, does not include the size of an aggregate of the composite tungsten oxide fine particles, and is different from a dispersed particle size described below.

Note that the particle size is an average particle size measured and calculated from an electron microscopic image, and the particle size does not change even when the fine particles are processed into a fine particle dispersion film, a fine particle dispersion sheet, or a laminated glass sheet.

In addition, in the case of using the infrared radiation-absorbing material fine particle dispersion body in usages which require transparency, it is preferable that the above-described composite tungsten oxide fine particles have a dispersed particle size of 40 nm or less. This is because when the composite tungsten oxide fine particles have a dispersed particle size of 40 nm or less, the scattering of light due to the Mie scattering and the Rayleigh scattering of the fine particles is suppressed, the visibility in the visible light wavelength region can be maintained, and the transparency can be efficiently maintained at the same time. In the case of using the infrared radiation-absorbing material fine particle dispersion body for usages which particularly require transparency such as a windshield of automobiles, the dispersed particle size of the composite tungsten oxide fine particle is desirably set to 30 nm or less, and preferably 25 nm or less, in order to further suppress scattering.

Note that the dispersed particle size of the composite tungsten oxide fine particles means the particle size of a single particle of the composite tungsten oxide fine particles dispersed in the infrared radiation-absorbing material fine particle dispersion body and an aggregated particle formed by the composite tungsten oxide fine particles being aggregated.

### (1-3) Method for producing infrared radiation-absorbing material fine particles

Hereinafter, a method for producing composite tungsten oxide fine particles represented by the general formula M_{Y}WO_{Z} (infrared radiation-absorbing material fine particles) will be described.

The composite tungsten oxide fine particles can be obtained by weighing and mixing predetermined amounts of starting raw materials of the composite tungsten oxide, followed by heat treatment in an inert gas atmosphere or a reducing gas atmosphere. In addition, the starting raw materials of the composite tungsten oxide are a tungsten compound and a simple substance or a compound containing the element M. In order to produce a tungsten compound that is a starting raw material in which components are uniformly mixed at a molecular level, it is preferable to mix the raw materials in a solution, and it is preferable that a tungsten compound containing the element M be able to be dissolved in a solvent such as water or an organic solvent.

The above-described tungsten compound is preferably one or more selected from a tungsten trioxide powder, a tungsten dioxide powder, or a hydrate of tungsten oxide, or a tungsten hexachloride powder, or an ammonium tungstate powder, or a hydrate powder of tungsten oxide obtained by dissolving tungsten hexachloride in an alcohol and then drying the mixture, or a hydrate powder of tungsten oxide obtained by dissolving tungsten hexachloride in an alcohol, adding water thereto to form a precipitate, and then drying the mixture, or a tungsten compound powder obtained by drying an aqueous solution of ammonium tungstate, and a metal tungsten powder.

Here, in the case of producing composite tungsten oxide fine particles, when the starting raw material is a solution, the elements can be easily and uniformly mixed. From this viewpoint, it is further preferable to use an aqueous solution of ammonium tungstate or a solution of tungsten hexachloride.

On the other hand, a simple substance or a compound containing the element M includes a tungstate, a chloride salt, a nitrate, a sulfate, an oxalate, an oxide, a carbonate, a hydroxide, and the like containing the element M, but is not limited to these, and one which can be made into a solution are preferable.

The raw materials for producing the composite tungsten oxide fine particles will be described in detail again.

As the starting raw material for obtaining the composite tungsten oxide fine particles represented by the general formula M_{Y}WO_{Z}, it is possible to use a powder obtained by mixing one or more powders selected from a tungsten trioxide powder, a tungsten dioxide powder, or a hydrate of tungsten oxide, or a tungsten hexachloride powder, an ammonium tungstate powder, or a hydrate powder of a tungsten oxide obtained by dissolving tungsten hexachloride in an alcohol and then drying the mixture, or a hydrate powder of tungsten oxide obtained by dissolving tungsten hexachloride in an alcohol, adding water thereto to form a precipitate, and then drying the mixture, or a tungsten compound powder obtained by drying an aqueous solution of ammonium tungstate, and a metal tungsten powder, and a powder of a simple substance or a compound containing the element M.

Moreover, when the tungsten compound as the starting raw material for obtaining the composite tungsten oxide fine particles is a solution or a dispersion liquid, the elements can be easily and uniformly mixed. From this viewpoint, it is further preferable that the starting raw material of the composite tungsten oxide fine particles be a powder obtained by mixing an alcohol solution of tungsten hexachloride or an aqueous solution of ammonium tungstate with a solution of a compound containing the element M and then drying the mixture.

Similarly, it is also preferable that the starting raw material of the composite tungsten oxide fine particles be a powder obtained by mixing a dispersion liquid which is obtained by dissolving tungsten hexachloride in an alcohol, adding water thereto to generate a precipitate with a powder of a simple substance or a compound containing the element M or a solution of a compound containing the element M, and then drying the mixture.

The above-described compound containing the element M includes a tungstate, a chloride salt, a nitrate, a sulfate, an oxalate, an oxide, a carbonate, a hydroxide, and the like of the element M, but is not limited to these, and only has to be able to be made into a solution. Moreover, in the case of industrially producing the composite tungsten oxide fine particles, a production method using a hydrate powder of a tungsten oxide or tungsten trioxide and a carbonate or a hydroxide of the element M is preferable because it does not generate a toxic gas or the like at the stage of heat treatment or the like.

Here, the heat treatment condition in the inert atmosphere for the composite tungsten oxide fine particles is preferably 650°C or more. The starting raw material heat-treated at 650°C or more has a sufficient infrared radiation-absorbing capability and has a good efficiency as fine particles having an infrared radiation-absorbing function. As the inert gas, an inert gas such as Ar or N₂ is favorably used. In addition, the heat treatment condition in the reducing atmosphere is preferably such that the starting raw material is first heat-treated at 100°C or more and 850°C or less in a reducing gas atmosphere, and subsequently heat-treated at a temperature of 650°C or more and 1200°C or less in an inert gas atmosphere. The reducing gas at this time is not particularly limited, but is preferably H₂. In addition, when H₂ is used as the reducing gas, as the composition of the reducing atmosphere, the volume ratio of H₂ is preferably 0.1% or more, and further preferably 2% or more. When the volume ratio of H₂ is 0.1% or more, reduction can be allowed to efficiently proceed.

### (2) Iron oxyhydroxide (FeOOH) fine particles

(2-1) The infrared radiation-absorbing material fine particle dispersion liquid and the infrared radiation-absorbing material fine particle dispersion body according to the present embodiment comprise infrared radiation-absorbing material fine particles (composite tungsten oxide fine particles) and iron oxyhydroxide (FeOOH) fine particles. Iron oxyhydroxide (FeOOH) fine particles are known as an inorganic ultraviolet absorber which absorbs UVA (having a wavelength of 315 to 400 nm). UVA contained in the sunlight mostly passes through the ozone layer of the earth, reaches the ground surface as well, and tans the skin of the human body with sunburn. UVA also reaches the dermis of the skin and affects the aging of the skin.

An infrared radiation-absorbing material fine particle dispersion body obtained by using the infrared radiation-absorbing material fine particle dispersion liquid according to the present embodiment has high transmittance for light in the visible light region and has absorbance in the near-infrared region, and further contains iron oxyhydroxide (FeOOH) fine particles to absorb and block UVA contained in the sunlight and to make the color adjustable to a neutral color between blue and bronze (a pale yellow-green or pale blue color in which yellowishness and bluishness are suppressed).

(2-2) In addition, it is desirable that the particle size of the iron oxyhydroxide (FeOOH) fine particles be 1 nm or more and 200 nm or less. This is because iron oxyhydroxide (FeOOH) fine particles having a particle size of 1 nm or more are industrially available, and in the case where iron oxyhydroxide (FeOOH) fine particles having a particle size of more than 200 nm are used, the same problem as in the case of composite tungsten oxide fine particles having a particle size of more than 200 nm occurs.

Here, the particle size of the iron oxyhydroxide (FeOOH) fine particles is a size of individual iron oxyhydroxide (FeOOH) fine particles that are not aggregated, that is, the average value of the primary particle size, and is the average particle size of iron oxyhydroxide (FeOOH) fine particles contained in the infrared radiation-absorbing material fine particle dispersion body which will be described later.

### (3) Infrared radiation-absorbing material fine particle dispersion liquid

The infrared radiation-absorbing material fine particle dispersion liquid according to the present embodiment can be produced by dispersing infrared radiation-absorbing material fine particles (composite tungsten oxide fine particles) and iron oxyhydroxide (FeOOH) fine particles in a liquid medium in a predetermined ratio. In this case, the infrared radiation-absorbing material fine particle dispersion liquid may be produced by preparing a composite tungsten oxide fine particle dispersion liquid in which composite tungsten oxide fine particles (infrared radiation-absorbing material fine particles) are dispersed in a liquid medium and an iron oxyhydroxide (FeOOH) fine particle dispersion liquid in which iron oxyhydroxide (FeOOH) fine particles are dispersed in a liquid medium in advance, and then mixing these composite tungsten oxide fine particle dispersion liquid and iron oxyhydroxide (FeOOH) fine particle dispersion liquid. Since the above-described composite tungsten oxide fine particles and iron oxyhydroxide (FeOOH) fine particles are differently pulverized and dispersed into a liquid medium, it is desirable to separately produce a composite tungsten oxide fine particle dispersion liquid and an iron oxyhydroxide (FeOOH) fine particle dispersion liquid in advance.

Note that in the present embodiment, a mixture of a composite tungsten oxide fine particle dispersion liquid and an iron oxyhydroxide fine particle dispersion liquid is sometimes abbreviated as a "fine particle dispersion liquid".

### (3-1) Composite tungsten oxide fine particle dispersion liquid and iron oxyhydroxide fine particle dispersion liquid

The composite tungsten oxide fine particle dispersion liquid according to the present embodiment can be obtained by adding the above-described composite tungsten oxide fine particles (infrared radiation-absorbing material fine particles), and optionally appropriate amounts of a dispersant, a coupling agent, a surfactant, and the like to a liquid medium, and performing dispersion treatment.

In addition, the iron oxyhydroxide (FeOOH) fine particle dispersion liquid according to the present embodiment can be obtained by adding the iron oxyhydroxide (FeOOH) fine particles, and optionally appropriate amounts of a dispersant, a coupling agent, a surfactant, and the like to a liquid medium, and performing dispersion treatment.

The respective liquid media of the above-described composite tungsten oxide fine particle dispersion liquid and iron oxyhydroxide (FeOOH) fine particle dispersion liquid are required to have a function of keeping dispersibility of the composite tungsten oxide fine particles (infrared radiation-absorbing material fine particles) and the iron oxyhydroxide (FeOOH) fine particles and a function of preventing a coating defect when the infrared radiation-absorbing material fine particle dispersion liquid (a dispersion liquid in which the composite tungsten oxide fine particles and the FeOOH fine particles are dispersed in a liquid medium) is applied. In addition, as the respective liquid media used in the composite tungsten oxide fine particle dispersion liquid and the iron oxyhydroxide (FeOOH) fine particle dispersion liquid, the same solvent or solvents having compatibility are desirable.

### (3-1-1) Liquid medium

As the above-described liquid media, water, an organic solvent, a vegetable oil, a vegetable oil-derived compound, a petroleum-based solvent, an oil and/or fat, a liquid resin, a liquid plasticizer for plastic, or a mixture of these can be selected.

Then, as an organic solvent satisfying the above-mentioned requirements, various organic solvents such as alcohol-based, ketone-based, hydrocarbon-based, glycol-based, and water-based solvents can be selected. Specifically, organic solvents include alcohol-based solvents such as methanol, ethanol, 1-propanol, isopropanol, butanol, pentanol, benzyl alcohol, and diacetone alcohol; ketone-based solvents such as acetone, methyl ethyl ketone, methyl propyl ketone, methyl isobutyl ketone, cyclohexanone, and isophorone; ester-based solvents such as 3-methyl-methoxy-propionate; glycol derivatives such as ethylene glycol monomethyl ether, ethylene glycol monoethyl ether, ethylene glycol isopropyl ether, propylene glycol monomethyl ether, propylene glycol monoethyl ether, propylene glycol methyl ether acetate, and propylene glycol ethyl ether acetate; amides such as formamide, N-methylformamide, dimethylformamide, dimethylacetamide, and N-methyl-2-pyrrolidone; aromatic hydrocarbons such as toluene and xylene; halogenated hydrocarbons such as ethylene chloride and chlorobenzene, and the like. Among these, organic solvents having low polarity are preferable, and particularly, isopropyl alcohol, ethanol, 1-methoxy-2-propanol, dimethyl ketone, methyl ethyl ketone, methyl isobutyl ketone, toluene, propylene glycol monomethyl ether acetate, n-butyl acetate, and the like are more preferable. One of these solvents may be used alone, or two or more of these may be used in combination.

As the above-described vegetable oil, flaxseed oil, sunflower oil, tung oil, sesame oil, cottonseed oil, rapeseed oil, soybean oil, rice bran oil, olive oil, coconut oil, palm oil, dehydrated castor oil, and the like are preferable.

As the vegetable oil-derived compound, vegetable oils such as fatty acid monoesters and ethers obtained by directly esterifying fatty acids of vegetable oils and monoalcohols, and the like are preferable.

As the petroleum-based solvent, ISOPAR E, Exxsol Hexane, Exxsol Heptane, Exxsol E, Exxsol D30, Exxsol D40, Exxsol D60, Exxsol D80, Exxsol D95, Exxsol D110, Exxsol D130 (all produced by Exxon Mobil Corporation ), and the like are preferable.

As the liquid resin, methyl methacrylate and the like are preferable. In addition, as the liquid plasticizer for plastic, a plasticizer that is a compound of a monovalent alcohol and an organic acid ester, ester-based plasticizers such as a polyhydric alcohol organic acid ester compound, a phosphoric acid-based plasticizer such as an organic phosphoric acid-based plasticizer, and the like are given as preferable examples. Among these, triethylene glycol di-2-ethyl hexanoate, triethylene glycol di-2-ethyl butyrate, and tetraethylene glycol di-2-ethyl hexanoate are further preferable because these have low hydrolyzability.

### (3-1-2) Dispersant, coupling agent, and surfactant

The above-described dispersant, coupling agent, and surfactant can be selected in accordance with the usage, but preferably have an amine-containing group, a hydroxyl group, a carboxyl group, or an epoxy group as a functional group. These functional groups are adsorbed onto the surfaces of the composite tungsten oxide fine particles, prevent aggregation of the composite tungsten oxide fine particles and the iron oxyhydroxide (FeOOH) fine particles, and have the effect of uniformly dispersing the infrared radiation-absorbing material fine particles and the iron oxyhydroxide (FeOOH) fine particles even in the infrared radiation-absorbing material fine particle dispersion body (fine particle dispersion film) according to the present embodiment.

A preferably used dispersant includes a phosphate ester compound, a polymer-based dispersant, a silane-based coupling agent, a titanate-based coupling agent, an aluminum-based coupling agent, and the like, but is not limited to these. The polymer-based dispersant includes an acrylic-based polymer dispersant, a urethane-based polymer dispersant, an acrylic block copolymer-based polymer dispersant, a polyether-based dispersant, a polyester-based polymer dispersant, and the like.

In addition, the amount of the dispersant to be added is desirably in ranges of 10 parts by mass to 1000 parts by mass relative to 100 parts by mass of the composite tungsten oxide fine particles, and 10 parts by mass to 1000 parts by mass relative to 100 parts by mass of the iron oxyhydroxide (FeOOH) fine particles, and more preferably in ranges of 20 parts by mass to 200 parts by mass relative to 100 parts by mass of each fine particles. When the amount of the dispersant to be added is in the above-described range, the composite tungsten oxide fine particles (infrared radiation-absorbing material fine particles) and the iron oxyhydroxide (FeOOH) fine particles are not aggregated in a liquid medium, so that the dispersion stability is maintained.

The method for dispersion treatment can be selected as desired from publicly-known methods as long as the method allows the composite tungsten oxide fine particles (infrared radiation-absorbing material fine particles) and the iron oxyhydroxide (FeOOH) fine particles to be uniformly dispersed in a liquid medium, and, for example, methods such as bead mill, ball mill, sand mill, and ultrasonic dispersion can be used.

In addition, in order to obtain a uniform composite tungsten oxide fine particle dispersion liquid and iron oxyhydroxide (FeOOH) fine particle dispersion liquid, various additives may be added or pH may be adjusted.

### (3-1-3) Contents of fine particles

The content of fine particles of each of the above-mentioned composite tungsten oxide fine particle dispersion liquid and iron oxyhydroxide (FeOOH) fine particle dispersion liquid is preferably 0.01% by mass to 75% by mass, and further preferably 1% by mass or more and 35% by mass or less. This is because when the content of the fine particles is 0.01% by mass or more, the fine particles can be favorably used in production of a coating film, a plastic molded body (one form of the infrared radiation-absorbing material fine particle dispersion body according to the present invention), and the like, which will be described later, and when the content is 75% by mass or less, industrial production is easy.

### (3-2) Method for producing infrared radiation-absorbing material fine particle dispersion liquid

The infrared radiation-absorbing material fine particle dispersion liquid according to the present embodiment can be produced by mixing the composite tungsten oxide fine particle dispersion liquid and the iron oxyhydroxide (FeOOH) fine particle dispersion liquid such that the infrared radiation-absorbing material fine particles (composite tungsten oxide fine particles) and the iron oxyhydroxide (FeOOH) fine particles satisfy a mass ratio described below.

Then, the mass ratio between the iron oxyhydroxide (FeOOH) fine particles and the composite tungsten oxide fine particles in a liquid medium [iron oxyhydroxide (FeOOH) fine particles/composite tungsten oxide fine particles] is 0.01 or more and 0.5 or less, preferably 0.01 or more and 0.3 or less, more preferably 0.01 or more and 0.13 or less, and further preferably 0.01 or more and 0.1 or less.

(3-2-1) If the above-described mass ratio [iron oxyhydroxide (FeOOH) fine particles/composite tungsten oxide fine particles] exceeds 0.5, the following problem occurs. For example, a problem occurs in which in an infrared radiation-absorbing material fine particle dispersion body obtained by using the infrared radiation-absorbing material fine particle dispersion liquid according to the present embodiment, which is adjusted to have a visible light transmittance of 60% or more and 80% or less, when the color tone of the dispersion body is evaluated in an L*a*b* color system, b* exceeds 20, so that the yellowishness becomes strong. Note that when b* can be set to 5 or less when the color tone of the infrared radiation-absorbing material fine particle dispersion body is evaluated in the L*a*b* color system, a natural color (a pale yellow-green or pale blue color) in which bluishness attributable to the composite tungsten oxide fine particles is suppressed can be obtained. Then, in the case where the above-described mass ratio [iron oxyhydroxide (FeOOH) fine particles/composite tungsten oxide fine particles] is set to 0.13 or less, it becomes possible to set b* to 5 or less when the color tone of an infrared radiation-absorbing material fine particle dispersion obtained body by using the infrared radiation-absorbing material fine particle dispersion liquid is evaluated in the L*a*b* color system.

In addition, in the case where the above-described mass ratio [iron oxyhydroxide (FeOOH) fine particles/composite tungsten oxide fine particles] is less than 0.01, bluishness attributable to the composite tungsten oxide fine particles cannot be suppressed, so that the color tone of an infrared radiation-absorbing material fine particle dispersion body obtained by using the infrared radiation-absorbing material fine particle dispersion liquid becomes bluish color tone, and color shade becomes unfavorable.

(3-2-2) On the other hand, in the case where the mass ratio between the iron oxyhydroxide (FeOOH) fine particles and the composite tungsten oxide fine particles in a liquid medium [iron oxyhydroxide (FeOOH) fine particles/composite tungsten oxide fine particles] is set to 0.01 or more and 0.5 or less described above, when the color tone of an infrared radiation-absorbing material fine particle dispersion body obtained from the infrared radiation-absorbing material fine particle dispersion liquid is evaluated in the L*a*b* color system, a* falls in a range of -20 or more and 0 or less, and b* falls in a range of -3.0 or more and 20 or less. Hence, it becomes possible to adjust the color tone to a neutral color between blue and bronze, in which the above-mentioned yellowishness and bluishness are suppressed (a pale yellow-green or pale blue color). In addition, in consideration of the chroma c*=[(a*)²+(b*)²]^{1/2} in the L*a*b* color system regarding the above-described color tone, the chroma c* is preferably 20 or less, more preferably 15 or less, and further preferably 10 or less. Note that the chroma c* in the L*a*b* color system is an index indicating the degree at which a* and b* components are contained. The chroma c* is 0 for achromatic color, and the smaller the chroma c* is, the more neutral the color tone is.

(3-2-3) Then, an infrared radiation-absorbing material fine particle dispersion body having a neutral color tone excellent in chroma is such that a* is in a range of -7.5 or more and 0 or less, b* is in a range of - 3.0 or more and 10 or less, and c* is in a range of 10 or less. In addition, an infrared radiation-absorbing material fine particle dispersion body having a neutral color excellent in chroma can be obtained by setting the mass ratio between the iron oxyhydroxide (FeOOH) fine particles and the composite tungsten oxide fine particles in a liquid medium [iron oxyhydroxide (FeOOH) fine particles/composite tungsten oxide fine particles] to 0.13 or less, and further 0.1 or less.

### 2. Infrared radiation-absorbing material fine particle dispersion body

### (1) Infrared radiation-absorbing material fine particle dispersion body

The infrared radiation-absorbing material fine particle dispersion body according to the present embodiment is an infrared radiation-absorbing material fine particle dispersion body in which infrared radiation-absorbing material fine particles, iron oxyhydroxide (FeOOH) fine particles, and an additive added as necessary are dispersed in a solid medium, and the infrared radiation-absorbing material fine particles are formed of composite tungsten oxide fine particles which are represented by the general formula M_{Y}WO_{Z} and which have a hexagonal crystal structure, and the infrared radiation-absorbing material fine particle dispersion body can be obtained by dispersing the infrared radiation-absorbing material fine particle dispersion liquid according to the present embodiment in a solid medium. Note that when the infrared radiation-absorbing material fine particle dispersion liquid according to the present embodiment is processed into the above-described infrared radiation-absorbing material fine particle dispersion body, part or all of the liquid medium contained in the infrared radiation-absorbing material fine particle dispersion liquid is removed by vaporization or the like.

### (1-1) Mass ratio between iron oxyhydroxide fine particles and composite tungsten oxide fine particles

Then, for the infrared radiation-absorbing material fine particle dispersion body according to the present embodiment, the mass ratio between the iron oxyhydroxide (FeOOH) fine particles and the composite tungsten oxide fine particles [iron oxyhydroxide (FeOOH) fine particles/composite tungsten oxide fine particles] needs to be 0.01 or more and 0.5 or less as mentioned above.

This is because in the case where the above-described mass ratio is set to 0.01 or more and 0.5 or less, when the color tone of the infrared radiation-absorbing material fine particle dispersion body is evaluated in the L*a*b* color system, a* falls in a range of -20 or more and 0 or less, and b* falls in a range of -3.0 or more and 20 or less. Hence, it becomes possible to adjust the color tone to a neutral color between blue and bronze, in which yellowishness and bluishness are suppressed (a pale yellow-green or pale blue color).

### (1-2) Content of composite tungsten oxide fine particles (infrared radiation-absorbing material fine particles)

In addition, the content per unit of projected area of the composite tungsten oxide fine particles (infrared radiation-absorbing material fine particles) contained in the infrared radiation-absorbing material fine particle dispersion body according to the present embodiment is preferably 0.1 g/m² or more and 5.0 g/m² or less. This is because when the content per unit of projected area of the composite tungsten oxide fine particles contained in the infrared radiation-absorbing material fine particle dispersion body is in the above-described range, the visible light transmittance and the solar shielding performance (infrared radiation shielding performance) can be achieved.

Note that the above-described "content per unit of projected area" means a mass (g) of the composite tungsten oxide fine particles (infrared radiation-absorbing material fine particles) contained in the thickness direction per unit area (m²) through which light passes in the infrared radiation-absorbing material fine particle dispersion body according to the present embodiment.

### (1-3) Solid medium

As the above-described solid medium in which the composite tungsten oxide fine particles (infrared radiation-absorbing material fine particles) and the iron oxyhydroxide (FeOOH) fine particles are dispersed, for example, a UV-curable resin, a thermosetting resin, an electron beam-curable resin, a room temperature-curable resin, a thermoplastic resin, or the like can be selected in accordance with the purpose. Specifically, the solid medium includes polyethylene resin, polyvinyl chloride resin, polyvinylidene chloride resin, polyvinyl alcohol resin, polystyrene resin, polypropylene resin, ethylene-vinyl acetate copolymer, polyester resin, polyethylene terephthalate resin, fluorine resin, polycarbonate resin, acrylic resin, and polyvinyl butyral resin. One of these resins may be used alone, or two or more of these may be used in mixture.

In addition, it is also possible to use a binder using a metal alkoxide. As the above-described metal alkoxide, alkoxides of Si, Ti, Al, Zr, and the like are representative. The binder using these metal alkoxides can form an oxide film as a solid medium through hydrolysis·polycondensation by heating or the like.

Then, when obtaining the infrared radiation-absorbing material fine particle dispersion body, the infrared radiation-absorbing material fine particle dispersion liquid according to the present embodiment can be processed into a dispersion powder, a masterbatch, a film, a plastic molded body, or the like.

### (1-4) Additive

In order to further add an ultraviolet radiation shielding function to the infrared radiation-absorbing material fine particle dispersion body according to the present embodiment, at least one or more types of particles of inorganic titanium oxide, zinc oxide, cerium oxide, and the like and organic benzophenone, benzotriazole and the like may be added.

In addition, in order to improve the visible light transmittance of the infrared radiation-absorbing material fine particle dispersion body according to the present embodiment, transparent particles of ATO, ITO, aluminum-doped zinc oxide, indium-tin composite oxide, or the like may be further mixed in the solid medium. By adding these transparent particles into the solid medium, while transmittance at a wavelength of near 750 nm is increased, an infrared light having a wavelength longer than 1200 nm is shielded. Hence, an infrared radiation-absorbing material fine particle dispersion body which has high transmittance for light in the visible light region and has absorbance in the near-infrared region can be obtained.

### (2) Embodiments of infrared radiation-absorbing material fine particle dispersion body

Infrared radiation-absorbing material fine particle dispersions body in various forms shown below can be obtained by using the infrared radiation-absorbing material fine particle dispersion liquid according to the present embodiment.

### (2-1) Fine particle dispersion film including substrate and coating film

A fine particle dispersion film can be prepared by mixing the infrared radiation-absorbing material fine particle dispersion liquid with a plastic or a monomer to prepare a fine particle coating liquid, and applying the fine particle coating liquid thus obtained onto a substrate by a publicly-known method to form a coating film.

The above-described substrate includes a film, or optionally a board or the like, and its shape is not limited. In addition, as a transparent substrate material, PET (polyethylene terephthalate), acrylic, urethane, polycarbonate, polyethylene, ethylene-vinyl acetate copolymer, vinyl chloride, fluorine resin, or the like can be used in accordance with various purposes. In addition, besides resins, glass can be used.

### (2-2) Fine particle dispersion body in the form of particulates

A fine particle dispersion body in the form of particulates (dispersion particulates or a plasticizer dispersion liquid) can be prepared by removing a volatile component from the infrared radiation-absorbing material fine particle dispersion liquid according to the present embodiment.

Note that the "dispersion powder" means a dispersion in which infrared radiation-absorbing material fine particles are dispersed in a high concentration in a resin and/or in a dispersant derived from the infrared radiation-absorbing material fine particle dispersion liquid by removing a volatile component from the infrared radiation-absorbing material fine particle dispersion liquid (containing a resin component and a plasticizer). In addition, the above-described "plasticizer dispersion liquid" means a dispersion liquid in which infrared radiation-absorbing material fine particles are dispersed in a high concentration in a plasticizer by removing a volatile component.

The method for removing a volatile component from the infrared radiation-absorbing material fine particle dispersion liquid is preferably to dry the fine particle dispersion liquid under reduced pressure. Specifically, the infrared radiation-absorbing material fine particle dispersion liquid is dried under reduced pressure while being stirred to separate compositions of infrared radiation-absorbing material fine particles and iron oxyhydroxide (FeOOH) fine particles and a volatile component. The device used for drying under reduced pressure includes a vacuum stirring-type dryer, but only has to be a device having the above-described function, and is not particularly limited. In addition, the pressure value at the time of depressurization in the drying step can be selected as appropriate.

By using the reduced-pressure drying method, the efficiency of removing a volatile component from the infrared radiation-absorbing material fine particle dispersion liquid is improved, and since the above-described "dispersion powder" or "plasticizer dispersion liquid" is not exposed to a high temperature for a long period of time, aggregation of infrared radiation-absorbing material fine particles and iron oxyhydroxide (FeOOH) fine particles dispersed in the "dispersion powder" or "plasticizer dispersion liquid" does not occur, and the reduced-pressure drying method is thus preferable. Moreover, since the productivity of a "dispersion powder" or a "plasticizer dispersion liquid" is also improved, and it is also easy to collect an evaporated volatile component, the reduced-pressure drying method is preferable also from the viewpoint of environmental consideration.

In the "dispersion powder" or the "plasticizer dispersion liquid" according to the present embodiment, a remaining volatile component is preferably 5% by mass or less. This is because when a remaining volatile component is 5% by mass or less, bubbles are not generated at the time of processing the "dispersion powder" or the "plasticizer dispersion liquid" into a "laminated transparent substrate", which will be described later, and favorable appearance and optical properties are maintained.

In addition, a masterbatch according to the present embodiment can be obtained by uniformly mixing the "dispersion powder" or the "plasticizer dispersion liquid" according to the present embodiment with particulates or pellets of a thermoplastic resin and another additive as necessary, and kneading the mixture with a vent type single-screw or twin-screw extruder, and processing the material into pellets by a method for cutting general melt-extruded strands. In this case, the shape may be a columnar shape or a rectangular columnar shape. In addition, it is also possible to employ a so-called hot cut method in which a melt extrudate is directly cut. In this case, it is common to take a shape close to a spherical shape.

As the transparent thermoplastic resin, a preferable resin can be selected from a resin selected from resins such as polyethylene terephthalate resin, polycarbonate resin, acrylic resin, styrene resin, polyamide resin, polyethylene resin, vinyl chloride resin, olefin resin, epoxy resin, polyimide resin, fluorine resin, and ethylene-vinyl acetate copolymer, a mixture of two or more resins selected from the above resins, a copolymer of two or more resins selected from the above resins.

### (2-3) Fine particle dispersion sheet, fine particle dispersion film

A sheet-shaped fine particle dispersion sheet or a film-shaped fine particle dispersion film in which infrared radiation-absorbing material fine particles and iron oxyhydroxide (FeOOH) fine particles are dispersed in a transparent resin can be produced by uniformly mixing the above-mentioned "dispersion powder", "plasticizer dispersion liquid", or masterbatch in the transparent resin.

In the case of producing the fine particle dispersion sheet or the fine particle dispersion film according to the present embodiment, various thermoplastic resins can be used as the resin contained in the sheet or the film. Then, a thermoplastic resin having sufficient transparency is preferable from the viewpoint that the fine particle dispersion sheet or the fine particle dispersion film according to the present embodiment is applied to various window members.

Specifically, a preferable resin can be selected from a resin selected from resins such as polyethylene terephthalate resin, polycarbonate resin, acrylic resin, styrene resin, polyamide resin, polyethylene resin, vinyl chloride resin, olefin resin, epoxy resin, polyimide resin, fluorine resin, and ethylene-vinyl acetate copolymer, a mixture of two or more resins selected from the above resins, or a copolymer of two or more resins selected from the above resins.

In addition, in the case of using the fine particle dispersion sheet according to the present embodiment as a board-shaped window member as it is, polyethylene terephthalate resin, polycarbonate resin, or acrylic resin is preferable, and polycarbonate resin is further preferable, from the viewpoint of their high transparency and general properties required as window members, that is, rigidity, light weight, long-term durability, cost, and the like.

On the other hand, in the case of using the fine particle dispersion sheet or the fine particle dispersion film according to the present embodiment as an intermediate layer of a "laminated transparent substrate", which will be described later, polyvinyl acetal resin or ethylene-vinyl acetate copolymer is preferable, and polyvinyl butyral resin is further preferable, from the viewpoint of adhesion with a transparent substrate, weather resistance, penetration resistance, and the like.

In addition, in the case of using the fine particle dispersion sheet or the fine particle dispersion film as an intermediate layer, where a thermoplastic resin contained in the sheet or film does not have sufficient flexibility or adhesion with a transparent substrate alone (for example the thermoplastic resin is polyvinyl acetal resin), it is preferable to further add a plasticizer.

As the above-described plasticizer, a substance used as a plasticizer for the thermoplastic resin according to the present embodiment can be used. For example, a plasticizer used for a fine particle dispersion film formed of a polyvinyl acetal resin includes, a plasticizer that is a compound of a monovalent alcohol and an organic acid ester, an ester-based plasticizer such as a polyhydric alcohol organic acid ester compound, a phosphoric acid-based plasticizer such as an organic phosphoric acid-based plasticizer, and the like. Any of these plasticizers is preferably a liquid at room temperature. Among these, a plasticizer that is an ester compound synthesized from a polyhydric alcohol and a fatty acid is preferable.

A fine particle dispersion sheet can be produced by kneading the above-mentioned "dispersion powder", "plasticizer dispersion liquid", or masterbatch with a thermoplastic resin and optionally another additive such as a plasticizer, and then molding the kneaded product into, for example, a flat plate-shaped or curved plate-shaped sheet material by a publicly-known method such as an extrusion molding method or an injection molding method.

As the method for forming the above-described fine particle dispersion sheet or fine particle dispersion film, a publicly-known method can be used. For example, a calender roll method, an extrusion method, a casting method, an inflation method, and the like can be used.

### (2-4) Laminated transparent substrate

A "laminated transparent substrate" in which the fine particle dispersion sheet or the fine particle dispersion film according to the present embodiment is interposed as an intermediate layer between a plurality of transparent substrates each formed of a material such as a plate glass or a plastic will be described.

This "laminated transparent substrate" is obtained by sandwiching an intermediate layer with transparent substrates from both sides. As the transparent substrate, a plate glass, or a plate-shaped plastic or a film-shaped plastic that is transparent in the visible light region is used. The material of the plastic is not particularly limited and can be selected in accordance with the usage. For example, in the case of using in transportation equipment such as automobiles, from the viewpoint of ensuring the transparency for a driver or passenger of the transportation equipment, a transparent resin such as polycarbonate resin, acrylic resin, or polyethylene terephthalate resin is preferable, and besides, PET resin, polyamide resin, vinyl chloride resin, olefin resin, epoxy resin, polyimide resin, fluorine resin, and the like can be used.

In addition, the "laminated transparent substrate" according to the present embodiment can also be obtained by bonding and integrating a plurality of pieces of inorganic glass between which the above-described fine particle dispersion sheet or fine particle dispersion film is sandwiched by a publicly-known method. The "laminated transparent substrate" thus obtained can be used primarily as an inorganic glass for a front part of an automobile or a window of a building.

The concentration of the infrared radiation-absorbing material fine particles (composite tungsten oxide fine particles) contained in the above-described fine particle dispersion sheet, fine particle dispersion film, and "laminated transparent substrate" is not particularly limited, but the content of the composite tungsten oxide fine particles (infrared radiation-absorbing material fine particles) per unit of projected area of the sheet/film is preferably the above-mentioned 0.1 g/m² or more and 5.0 g/m² or less. When the above-described content is 0.1 g/m² or more, the infrared radiation-absorbing properties can be significantly exerted as compared with the case where no infrared radiation-absorbing material fine particles are contained; and when the content is 5.0 g/m² or less, the transmittance for visible light in the fine particle dispersion sheet/film can be maintained.

### Examples

Hereinafter, Examples according to the present invention will be specifically described also with Comparative Examples given; however, the present invention is not limited to the following Examples.

### (1) Transmittance of infrared radiation-absorbing material fine particle dispersion liquid and infrared radiation-absorbing material fine particle dispersion body

The transmittances of the infrared radiation-absorbing material fine particle dispersion liquids according to Examples and Comparative Examples for light in a wavelength of 300 to 2100 nm were measured by holding the above-described dispersion liquids in a cell for spectrophotometer (manufactured by GL Sciences Inc., model number: S10-SQ-1, material: synthetic quartz, optical path length: 1 mm) and using a spectrophotometer U-4100 manufactured by Hitachi, Ltd.. At the time of this measurement, transmittance was measured with the above-described cell filled with a solvent (methyl isobutyl ketone: abbreviated as MIBK) of the above-described dispersion liquids to obtain a baseline for the measurement of transmittance. As a result, for spectral transmittance and visible light transmittance described below, light reflection on the surface of the cell for spectrophotometer and contribution of light absorption of the solvent are excluded, and only light absorption by the fine particles is calculated.

In addition, the transmittances of the infrared radiation-absorbing material fine particle dispersions body (fine particle dispersion films, fine particle dispersion sheets, laminated glass sheets) according to Examples and Comparative Examples for light in a wavelength of 300 to 2100 nm were also measured by using the spectrophotometer U-4100 manufactured by Hitachi, Ltd. The visible light transmittance was calculated from the transmittance for light in a wavelength of 380 to 780 nm based on JIS A5759.

### (2) Particle sizes of infrared radiation-absorbing material fine particles and iron oxyhydroxide fine particles

Average dispersed particle sizes (average values of dispersed particle sizes) of the infrared radiation-absorbing material fine particles and the iron oxyhydroxide (FeOOH) fine particles according to Examples and Comparative Examples were measured by using Microtrac particle size distribution meter manufactured by Nikkiso Co., Ltd. In addition, the particle size was calculated by observing a powder which was obtained by removing the solvent of each dispersion liquid by using a transmission electron microscope (TEM).

### (3) Color tone of infrared radiation-absorbing material fine particle dispersion liquid and infrared radiation-absorbing material fine particle dispersion body

For the color tones of the infrared radiation-absorbing material fine particle dispersion liquids and the infrared radiation-absorbing material fine particle dispersions body (fine particle dispersion films, fine particle dispersion sheets, laminated glass sheets) according to Examples and Comparative Examples, values of a* and b* were measured by using the L*a*b* color system (D65 light source/10-degree field of view) based on JIS Z 8701, and also chroma c*=[(a*)²+(b*)²]^{1/2} was also calculated.

### (4) Fine particle dispersion film

The "fine particle dispersion films" according to Examples and Comparative Examples (see Table 1-1, Table 1-2, and Table 1-3) each mean an infrared radiation-absorbing material fine particle dispersion body including a substrate (a PET film) and a coating film [an infrared radiation-absorbing film in which infrared radiation-absorbing material fine particles and iron oxyhydroxide fine particles (Comparative Example 1 did not include iron oxyhydroxide fine particles) were dispersed] formed on the substrate.

### (5) Fine particle dispersion sheet

The "fine particle dispersion sheets" according to Examples and Comparative Examples (see Table 1-1, Table 1-2, and Table 1-3) each mean an infrared radiation-absorbing material fine particle dispersion body including a polycarbonate sheet in which infrared radiation-absorbing material fine particles and iron oxyhydroxide fine particles ( Comparative Example 1 did not contain iron oxyhydroxide fine particles) were dispersed.

### (6) Laminated glass sheet

The "laminated glass sheets" according to Examples and Comparative Examples (see Table 1-1, Table 1-2, and Table 1-3) each mean an infrared radiation-absorbing material fine particle dispersion body including two plates of glass and an infrared radiation-absorbing film [a polyvinyl butyral film in which infrared radiation-absorbing material fine particles and iron oxyhydroxide fine particles (Comparative Example 1 did not contain iron oxyhydroxide fine particles) were dispersed] sandwiched between the two plates of glass.

### [Example 1]

### (1) Infrared radiation-absorbing material fine particle dispersion liquid

### (1-1) Composite tungsten oxide (Cs_{0.33}WO₃) fine particles

Powders of tungstic acid (H₂WO₄) and cesium hydroxide (CsOH) were weighed such that Cs/W (molar ratio)=about 0.33/1.00 and sufficiently mixed by using an agate mortar to obtain a mixed powder. The mixed powder was heated while a 5% H₂ gas with a N₂ gas as a carrier was supplied, followed by conducting reduction treatment at a temperature of 600°C for 1 hour. Thereafter, calcination was conducted at 800°C for 30 minutes under a N₂ gas atmosphere to obtain composite tungsten oxide (Cs_{0.33}WO₃) fine particles (hereinafter, abbreviated to as "powder A") according to Example 1.

The powder A was measured by an X-ray diffraction method, and it was determined that the powder A had a single hexagonal crystal phase.

### (1-2) Composite tungsten oxide fine particle dispersion liquid

20% by mass of the above-described powder A, 10% by mass of an acrylic-based polymer dispersant having an amine-containing group as a functional group (an acrylic dispersant having an amine value of 48 mgKOH/g and a decomposition temperature of 250°C: hereinafter, abbreviated as "dispersant a"), and 70% by mass of methyl isobutyl ketone (MIBK) were weighed. These were loaded into a paint shaker containing 0.3 mmφ ZrO₂ beads, and the mixture was pulverized and dispersed for 15 hours to obtain a composite tungsten oxide fine particle dispersion liquid (hereinafter, abbreviated as "dispersion liquid A"). Here, the average dispersed particle size of the infrared radiation-absorbing material fine particles (composite tungsten oxide fine particles) in the dispersion liquid A was measured to be 26 nm, and the particle size obtained from a TEM image was 19 nm.

### (1-3) FeOOH fine particle dispersion liquid

15% by mass of FeOOH fine particles, 80% by mass of MIBK, and 5% by mass of the above-described dispersant a were weighed. These were loaded into a paint shaker containing 0.3 mmφ ZrO₂ beads, and the mixture was pulverized and dispersed for 10 hours to obtain a FeOOH fine particle dispersion liquid (hereinafter, abbreviated as "dispersion liquid a"). Here, the average dispersed particle size of the FeOOH fine particles in the dispersion liquid a was measured to be 32 nm, and the particle size obtained from a TEM image was 35 nm.

### (1-4) Production of infrared radiation-absorbing material fine particle dispersion liquid

An infrared radiation-absorbing material fine particle dispersion liquid according to Example 1 (hereinafter, abbreviated as "fine particle dispersion liquid A") was produced by mixing the above-described dispersion liquid A and dispersion liquid a such that the mass ratio between the FeOOH fine particles and the composite tungsten oxide fine particles became [FeOOH fine particles/composite tungsten oxide fine particles]=0.03.

### (1-5) Optical properties of infrared radiation-absorbing material fine particle dispersion liquid

Then, the above-described fine particle dispersion liquid A was diluted with MIBK as appropriate, and placed in a 10 mm-thick rectangular container, and the spectral transmittance was measured.

From a transmittance profile of the fine particle dispersion liquid A which was measured by adjusting the dilution ratio such that the transmittance at a wavelength of 1000 nm became less than 10%, the average value of the transmittance in UV-A (at a wavelength of 315-400 nm) was 49.3%, the visible light transmittance was 80.6%, the solar (ST) transmittance was 43.2%, and in the CIE 1976 L*a*b* color space, the a* value was -5.1, the b* value was -3.5, and the c* value was 6.2.

Results of the measurements of the fine particle dispersion liquid A according to Example 1 are described in Table 1-1, Table 1-2, and Table 1-3.

### (2) Fine particle dispersion film

### (2-1) Production of fine particle dispersion film

To 100 parts by mass of the above-described fine particle dispersion liquid A, 50 parts by mass of "Aronix UV-3701" (hereinafter, referred to as UV-3701) produced by Toagosei Co., Ltd., which is an ultraviolet curable resin for hard coating, was mixed to obtain a fine particle coating liquid, and this fine particle coating liquid was applied onto a PET film (HPE-50 produced by Teijin Limited) by using a bar coater to form a coating film.

Note that the same PET film was used also in the other Examples and Comparative Examples.

Subsequently, the PET film on which the coating film was provided was dried at 80°C for 60 seconds to vaporize the solvent, followed by curing with a highpressure mercury lamp to prepare a fine particle dispersion film according to Example 1 (hereinafter, abbreviated as "fine particle dispersion film A") on which a coating film containing the infrared radiation-absorbing material fine particles (composite tungsten oxide fine particles) and the FeOOH fine particles was provided.

### (2-2) Optical properties of fine particle dispersion film

From a transmittance profile of the fine particle dispersion film A according to Example 1 which was measured by adjusting the concentration of the fine particles of the above-described fine particle coating liquid and the film thickness of the coating film such that the transmittance at a wavelength of 1000 nm became less than 10% in the fine particle dispersion film A according to Example 1, the average value of the transmittance in UV-A (at a wavelength of 315-400 nm) was 39.6%, the visible light transmittance was 71.9%, the solar (ST) transmittance was 38.4%, and in the CIE 1976 L*a*b* color space, the a* value was - 5.0, the b* value was -2.7, and the c* value was 5.7.

Results of the measurements of the fine particle dispersion film A according to Example 1 are described in Table 1-1, Table 1-2, and Table 1-3.

### (3) Fine particle dispersion sheet

### (3-1) Production of fine particle dispersion sheet

To the fine particle dispersion liquid A, the above-described dispersant a was further added to prepare a mixture such that the mass ratio between the dispersant a and the composite tungsten oxide fine particles became [dispersant a/composite tungsten oxide fine particles]=3. Thereafter, MIBK was removed from this fine particle dispersion liquid A by using a spray dryer to obtain a fine particle dispersion powder (hereinafter, abbreviated as "fine particle dispersion powder A").

Subsequently, the above-described fine particle dispersion powder A was added to polycarbonate resin, which is a thermoplastic resin, such that the transmittance at a wavelength of 1000 nm in a fine particle dispersion sheet (having a thickness of 2.0 mm) to be produced became less than 10%, to prepare a composition for producing a fine particle dispersion sheet.

The composition for producing a fine particle dispersion sheet thus prepared was kneaded at 280°C by using a twin-screw extruder, and extruded from a T-die, and a 2.0 mm-thick sheet material was formed by a calender roll method, to obtain a fine particle dispersion sheet according to Example 1 (hereinafter, abbreviated as "fine particle dispersion sheet A").

### (3-2) Optical properties of fine particle dispersion sheet

From a transmittance profile of the fine particle dispersion sheet A according to Example 1, the average value of the transmittance in UV-A (at a wavelength of 315-400 nm) was 38.9%, the visible light transmittance was 72.5%, the solar (ST) transmittance was 38.6%, and in the CIE 1976 L*a*b* color space, the a* value was - 5.1, the b* value was -2.8, and the c* value was 5.8.

Results of the measurements of the fine particle dispersion sheet A according to Example 1 are described in Table 1-1, Table 1-2, and Table 1-3.

### (4) Laminated glass sheet

### (4-1) Production of infrared radiation-absorbing film to be sandwiched between 2 plates of glass

To a polyvinyl butyral resin, triethylene glycol di-2-ethyl butyrate, which is a plasticizer, was added to prepare a mixture such that the mass ratio between the polyvinyl butyral resin and the plasticizer became [polyvinyl butyral resin/plasticizer]=100/40.

To this mixture, a predetermined amount of the above-described fine particle dispersion powder A was added to prepare a composition for producing an infrared radiation-absorbing film (a polyvinyl butyral film in which the infrared radiation-absorbing material fine particles and the iron oxyhydroxide fine particles were dispersed). Note that the above-described predetermined amount is such an amount that the transmittance at a wavelength of 1000 nm in the laminated glass sheet to be produced became less than 10%.

Subsequently, the composition for producing an infrared radiation-absorbing film was kneaded and mixed at 70°C for 30 minutes by using a three-roll mixer to obtain a mixture. The mixture was increased in temperature to 180°C in a molding extruder, molded into a film having a thickness of about 1 mm, which was wound around a roll to obtain an infrared radiation-absorbing film (a polyvinyl butyral film in which the infrared radiation-absorbing material fine particles and the iron oxyhydroxide fine particles were dispersed).

### (4-2) Production of laminated glass sheet

The infrared radiation-absorbing film thus obtained was cut into 10 cm×10 cm and sandwiched between two 3 mm-thick inorganic clear glass plates each having the same dimensions to obtain a laminate.

Next, this laminate was placed in a vacuum bag made of rubber, the bag was degassed and held at 90°C for 30 minutes, and then cooled down to ordinary temperature, and the laminate was taken out of the bag.

Then, the laminate was placed in an autoclave device and pressurized and heated at a pressure of 12 kg/cm² and a temperature of 140°C for 20 minutes to prepare a laminated glass sheet according to Example 1 (hereinafter, abbreviated as "laminated glass sheet A").

### (4-3) Optical properties of laminated glass sheet

From a transmittance profile of the laminated glass sheet A according to Example 1, the average value of the transmittance in UV-A (at a wavelength of 315-400 nm) was 34.7%, the visible light transmittance was 71.4%, the solar (ST) transmittance was 36.8%, and in the CIE 1976 L*a*b* color space, the a* value was - 6.5, the b* value was -2.2, and the c* value was 6.9.

Results of the measurements of the laminated glass sheet A according to Example 1 are described in Table 1-1, Table 1-2, and Table 1-3.

### [Example 2]

### (1) Infrared radiation-absorbing material fine particle dispersion liquid

### (1-1) Production of infrared radiation-absorbing material fine particle dispersion liquid

An infrared radiation-absorbing material fine particle dispersion liquid according to Example 2 (hereinafter, abbreviated as "fine particle dispersion liquid B") was produced by mixing the above-described dispersion liquid A (the composite tungsten oxide fine particle dispersion liquid according to Example 1, the same applies hereinafter) and dispersion liquid a (the FeOOH fine particle dispersion liquid according to Example 1, the same applies hereinafter) such that the mass ratio between the FeOOH fine particles and the composite tungsten oxide fine particles became [FeOOH fine particles/composite tungsten oxide fine particles]=0.1.

### (1-2) Optical properties of infrared radiation-absorbing material fine particle dispersion liquid

The fine particle dispersion liquid B according to Example 2 was diluted with MIBK as appropriate, and placed in a 10 mm-thick rectangular container, and the spectral transmittance was measured.

From a transmittance profile of the fine particle dispersion liquid B which was measured by adjusting the dilution ratio such that the transmittance at a wavelength of 1000 nm became less than 10%, the average value of the transmittance in UV-A (at a wavelength of 315-400 nm) was 33.6%, the visible light transmittance was 79.3%, the solar (ST) transmittance was 41.5%, and in the CIE 1976 L*a*b* color space, the a* value was -5.8, the b* value was -0.1, and the c* value was 5.8.

Results of the measurements of the fine particle dispersion liquid B according to Example 2 are described in Table 1-1, Table 1-2, and Table 1-3.

### (2) Fine particle dispersion film

### (2-1) Production of fine particle dispersion film

A fine particle dispersion film according to Example 2 (hereinafter, abbreviated as "fine particle dispersion film B") was prepared in the same manner as in Example 1 except that the above-described fine particle dispersion liquid B was used.

### (2-2) Optical properties of fine particle dispersion film

From a transmittance profile of the fine particle dispersion film B according to Example 2 which was measured by adjusting the concentration of the fine particles of the fine particle coating liquid and the film thickness of the coating film such that the transmittance at a wavelength of 1000 nm became less than 10% in the fine particle dispersion film B according to Example 2, the average value of the transmittance in UV-A (at a wavelength of 315-400 nm) was 27.2%, the visible light transmittance was 70.7%, the solar (ST) transmittance was 36.9%, and in the CIE 1976 L*a*b* color space, the a* value was -5.7, the b* value was 0.6, and the c* value was 5.7.

Results of the measurements of the fine particle dispersion film B according to Example 2 are described in Table 1-1, Table 1-2, and Table 1-3.

### (3) Fine particle dispersion sheet

### (3-1) Production of fine particle dispersion sheet

A fine particle dispersion powder according to Example 2 (hereinafter, abbreviated as "fine particle dispersion powder B") was obtained in the same manner as in Example 1 except that the above-described dispersant a was further added to the fine particle dispersion liquid B.

Subsequently, a fine particle dispersion sheet according to Example 2 (hereinafter, abbreviated as "fine particle dispersion sheet B") was obtained in the same manner as in Example 1 except that the above-described fine particle dispersion powder B was added to polycarbonate resin such that the transmittance at a wavelength of 1000 nm in a fine particle dispersion sheet (having a thickness of 2.0 mm) to be produced became less than 10%.

### (3-2) Optical properties of fine particle dispersion sheet

From a transmittance profile of the fine particle dispersion sheet B according to Example 2, the average value of the transmittance in UV-A (at a wavelength of 315-400 nm) was 26.8%, the visible light transmittance was 71.3%, the solar (ST) transmittance was 37.1%, and in the CIE 1976 L*a*b* color space, the a* value was - 5.7, the b* value was 0.5, and the c* value was 5.7.

Results of the measurements of the fine particle dispersion sheet B according to Example 2 are described in Table 1-1, Table 1-2, and Table 1-3.

### (4) Laminated glass sheet

### (4-1) Production of laminated glass sheet

An infrared radiation-absorbing film (a polyvinyl butyral film in which the infrared radiation-absorbing material fine particles and the iron oxyhydroxide fine particles were dispersed) was produced in the same manner as in Example 1 except that the above-described fine particle dispersion powder B was added to the mixture according to Example 1 which was prepared such that the mass ratio between the polyvinyl butyral resin and the plasticizer became [polyvinyl butyral resin/plasticizer]=100/40, and a laminated glass sheet according to Example 2 (hereinafter, abbreviated as "laminated glass sheet B") was prepared in the same manner as in Example 1 except that this infrared radiation-absorbing film was used.

### (4-2) Optical properties of laminated glass sheet

From a transmittance profile of the laminated glass sheet B according to Example 2, the average value of the transmittance in UV-A (at a wavelength of 315-400 nm) was 24.2%, the visible light transmittance was 70.3%, the solar (ST) transmittance was 35.4%, and in the CIE 1976 L*a*b* color space, the a* value was - 7.1, the b* value was 1.1, and the c* value was 7.2.

Results of the measurements of the laminated glass sheet B according to Example 2 are described in Table 1-1, Table 1-2, and Table 1-3.

### [Example 3]

### (1) Infrared radiation-absorbing material fine particle dispersion liquid

### (1-1) Production of infrared radiation-absorbing material fine particle dispersion liquid

An infrared radiation-absorbing material fine particle dispersion liquid according to Example 3 (hereinafter, abbreviated as "fine particle dispersion liquid C") was produced by mixing the above-described dispersion liquid A and dispersion liquid a such that the mass ratio between the FeOOH fine particles and the composite tungsten oxide fine particles became [FeOOH fine particles/composite tungsten oxide fine particles]=0.3.

### (1-2) Optical properties of infrared radiation-absorbing material fine particle dispersion liquid

The fine particle dispersion liquid C according to Example 3 was diluted with MIBK as appropriate, and placed in a 10 mm-thick rectangular container, and the spectral transmittance was measured.

From a transmittance profile of the fine particle dispersion liquid C which was measured by adjusting the dilution ratio such that the transmittance at a wavelength of 1000 nm became less than 10%, the average value of the transmittance in UV-A (at a wavelength of 315-400 nm) was 15.9%, the visible light transmittance was 77.4%, the solar (ST) transmittance was 39.3%, and in the CIE 1976 L*a*b* color space, the a* value was -7.6, the b* value was 6.9, and the c* value was 10.2.

Results of the measurements of the fine particle dispersion liquid C according to Example 3 are described in Table 1-1, Table 1-2, and Table 1-3.

### (2) Fine particle dispersion film

### (2-1) Production of fine particle dispersion film

A fine particle dispersion film according to Example 3 (hereinafter, abbreviated as "fine particle dispersion film C") was prepared in the same manner as in Example 1 except that the above-described fine particle dispersion liquid C was used.

### (2-2) Optical properties of fine particle dispersion film

From a transmittance profile of the fine particle dispersion film C according to Example 3 which was measured by adjusting the concentration of the fine particles of the fine particle coating liquid and the film thickness of the coating film such that the transmittance at a wavelength of 1000 nm became less than 10% in the fine particle dispersion film C according to Example 3, the average value of the transmittance in UV-A (at a wavelength of 315-400 nm) was 13.1%, the visible light transmittance was 69.0%, the solar (ST) transmittance was 35.0%, and in the CIE 1976 L*a*b* color space, the a* value was -7.2, the b* value was 7.2, and the c* value was 10.2.

Results of the measurements of the fine particle dispersion film C according to Example 3 are described in Table 1-1, Table 1-2, and Table 1-3.

### (3) Fine particle dispersion sheet

### (3-1) Production of fine particle dispersion sheet

A fine particle dispersion powder according to Example 3 (hereinafter, abbreviated as "fine particle dispersion powder C") was obtained in the same manner as in Example 1 except that the above-described dispersant a was further added to the fine particle dispersion liquid C.

Subsequently, a fine particle dispersion sheet according to Example 3 (hereinafter, abbreviated as "fine particle dispersion sheet C") was obtained in the same manner as in Example 1 except that the above-described fine particle dispersion powder C was added to polycarbonate resin such that the transmittance at a wavelength of 1000 nm in a fine particle dispersion sheet (having a thickness of 2.0 mm) to be produced became less than 10%.

### (3-2) optical properties of fine particle dispersion sheet

From a transmittance profile of the fine particle dispersion sheet C according to Example 3, the average value of the transmittance in UV-A (at a wavelength of 315-400 nm) was 13.0%, the visible light transmittance was 69.6%, the solar (ST) transmittance was 35.1%, and in the CIE 1976 L*a*b* color space, the a* value was - 7.3, the b* value was 7.1, and the c* value was 10.2.

Results of the measurements of the fine particle dispersion sheet C according to Example 3 are described in Table 1-1, Table 1-2, and Table 1-3.

### (4) Laminated glass sheet

### (4-1) Production of laminated glass sheet

An infrared radiation-absorbing film (a polyvinyl butyral film in which the infrared radiation-absorbing material fine particles and the iron oxyhydroxide fine particles were dispersed) was produced in the same manner as in Example 1 except that the above-described fine particle dispersion powder C was added to the mixture according to Example 1 which was prepared such that the mass ratio between the polyvinyl butyral resin and the plasticizer became [polyvinyl butyral resin/plasticizer]=100/40, and a laminated glass sheet according to Example 3 (hereinafter, abbreviated as "laminated glass sheet C") was prepared in the same manner as in Example 1 except that this infrared radiation-absorbing film was used.

### (4-2) Optical properties of laminated glass sheet

From a transmittance profile of the laminated glass sheet C according to Example 3, the average value of the transmittance in UV-A (at a wavelength of 315-400 nm) was 12.0%, the visible light transmittance was 68.6%, the solar (ST) transmittance was 33.5%, and in the CIE 1976 L*a*b* color space, the a* value was - 8.6, the b* value was 7.6, and the c* value was 11.5.

Results of the measurements of the laminated glass sheet C according to Example 3 are described in Table 1-1, Table 1-2, and Table 1-3.

### [Example 4]

### (1) Infrared radiation-absorbing material fine particle dispersion liquid

### (1-1) Production of infrared radiation-absorbing material fine particle dispersion liquid

An infrared radiation-absorbing material fine particle dispersion liquid according to Example 4 (hereinafter, abbreviated as "fine particle dispersion liquid D") was produced by mixing the above-described dispersion liquid A and dispersion liquid a such that the mass ratio between the FeOOH fine particles and the composite tungsten oxide fine particles became [FeOOH fine particles/composite tungsten oxide fine particles]=0.5.

### (1-2) Optical properties of infrared radiation-absorbing material fine particle dispersion liquid

The fine particle dispersion liquid D according to Example 4 was diluted with MIBK as appropriate, and placed in a 10 mm-thick rectangular container, and the spectral transmittance was measured.

From a transmittance profile of the fine particle dispersion liquid D which was measured by adjusting the dilution ratio such that the transmittance at a wavelength of 1000 nm became less than 10%, the average value of the transmittance in UV-A (at a wavelength of 315-400 nm) was 5.5%, the visible light transmittance was 74.2%, the solar (ST) transmittance was 36.5%, and in the CIE 1976 L*a*b* color space, the a* value was -7.5, the b* value was 16.6, and the c* value was 18.2.

Results of the measurements of the fine particle dispersion liquid D according to Example 4 are described in Table 1-1, Table 1-2, and Table 1-3.

### (2) Fine particle dispersion film

### (2-1) Production of fine particle dispersion film

A fine particle dispersion film according to Example 4 (hereinafter, abbreviated as "fine particle dispersion film D") was prepared in the same manner as in Example 1 except that the above-described fine particle dispersion liquid D was used.

### (2-2) Optical properties of fine particle dispersion film

From a transmittance profile of the fine particle dispersion film D according to Example 4 which was measured by adjusting the concentration of the fine particles of the fine particle coating liquid and the film thickness of the coating film such that the transmittance at a wavelength of 1000 nm became less than 10% in the fine particle dispersion film D according to Example 4, the average value of the transmittance in UV-A (at a wavelength of 315-400 nm) was 4.6%, the visible light transmittance was 66.2%, the solar (ST) transmittance was 32.6%, and in the CIE 1976 L*a*b* color space, the a* value was -7.1, the b* value was 16.6, and the c* value was 18.0.

Results of the measurements of the fine particle dispersion film D according to Example 4 are described in Table 1-1, Table 1-2, and Table 1-3.

### (3) Fine particle dispersion sheet

### (3-1) Production of fine particle dispersion sheet

A fine particle dispersion powder according to Example 4 (hereinafter, abbreviated as "fine particle dispersion powder D") was obtained in the same manner as in Example 1 except that the above-described dispersant a was further added to the fine particle dispersion liquid D.

Subsequently, a fine particle dispersion sheet according to Example 4 (hereinafter, abbreviated as "fine particle dispersion sheet D" was obtained in the same manner as in Example 1 except that the above-described fine particle dispersion powder D was added to polycarbonate resin such that the transmittance at a wavelength of 1000 nm in a fine particle dispersion sheet (having a thickness of 2.0 mm) to be produced became less than 10%.

### (3-2) Optical properties of fine particle dispersion sheet

From a transmittance profile of the fine particle dispersion sheet D according to Example 4, the average value of the transmittance in UV-A (at a wavelength of 315-400 nm) was 4.6%, the visible light transmittance was 66.8%, the solar (ST) transmittance was 32.7%, and in the CIE 1976 L*a*b* color space, the a* value was - 7.2, the b* value was 16.5, and the c* value was 18.0.

Results of the measurements of the fine particle dispersion sheet D according to Example 4 are described in Table 1-1, Table 1-2, and Table 1-3.

### (4) Laminated glass sheet

### (4-1) Production of laminated glass sheet

An infrared radiation-absorbing film (a polyvinyl butyral film in which the infrared radiation-absorbing material fine particles and the iron oxyhydroxide fine particles were dispersed) was produced in the same manner as in Example 1 except that the above-described fine particle dispersion powder D was added to the mixture according to Example 1 which was prepared such that the mass ratio between the polyvinyl butyral resin and the plasticizer became [polyvinyl butyral resin/plasticizer]=100/40, and a laminated glass sheet according to Example 4 (hereinafter, abbreviated as "laminated glass sheet D") was prepared in the same manner as in Example 1 except that this infrared radiation-absorbing film was used.

### (4-2) Optical properties of laminated glass sheet

From a transmittance profile of the laminated glass sheet D according to Example 4, the average value of the transmittance in UV-A (at a wavelength of 315-400 nm) was 4.3%, the visible light transmittance was 65.8%, the solar (ST) transmittance was 31.1%, and in the CIE 1976 L*a*b* color space, the a* value was - 8.4, the b* value was 16.8, and the c* value was 18.8.

Results of the measurements of the laminated glass sheet D according to Example 4 are described in Table 1-1, Table 1-2, and Table 1-3.

### [Comparative Example 1]

### (1) Infrared radiation-absorbing material fine particle dispersion liquid

### (1-1) Production of infrared radiation-absorbing material fine particle dispersion liquid

An infrared radiation-absorbing material fine particle dispersion liquid according to Comparative Example 1 (hereinafter, abbreviated as "fine particle dispersion liquid E") was produced such that the mass ratio between the FeOOH fine particles and the composite tungsten oxide fine particles became [FeOOH fine particles/composite tungsten oxide fine particles]=0.0, that is, which was formed of only the dispersion liquid A without mixing the dispersion liquid a.

### (1-2) Optical properties of infrared radiation-absorbing material fine particle dispersion liquid

The fine particle dispersion liquid E according to Comparative Example 1 was diluted with MIBK as appropriate, and placed in a 10 mm-thick rectangular container, and the spectral transmittance was measured.

From a transmittance profile of the fine particle dispersion liquid E which was measured by adjusting the dilution ratio such that the transmittance at a wavelength of 1000 nm became less than 10%, the average value of the transmittance in UV-A (at a wavelength of 315-400 nm) was 56.6%, the visible light transmittance was 81.3%, the solar (ST) transmittance was 44.1%, and in the CIE 1976 L*a*b* color space, the a* value was -4.8, the b* value was -4.8, and the c* value was 6.8.

Results of the measurements of the fine particle dispersion liquid E according to Comparative Example 1 are described in Table 1-1, Table 1-2, and Table 1-3.

### (2) Fine particle dispersion film

### (2-1) Production of fine particle dispersion film

A fine particle dispersion film according to Comparative Example 1 (hereinafter, abbreviated as "fine particle dispersion film E" was prepared in the same manner as in Example 1 except that the above-described fine particle dispersion liquid E was used.

### (2-2) Optical properties of fine particle dispersion film

From a transmittance profile of the fine particle dispersion film E according to Comparative Example 1 which was measured by adjusting the concentration of the fine particles of the fine particle coating liquid and the film thickness of the coating film such that the transmittance at a wavelength of 1000 nm became less than 10% in the fine particle dispersion film E according to Comparative Example 1, the average value of the transmittance in UV-A (at a wavelength of 315-400 nm) was 45.3%, the visible light transmittance was 72.5%, the solar (ST) transmittance was 39.1%, and in the CIE 1976 L*a*b* color space, the a* value was - 4.7, the b* value was -3.9, and the c* value was 6.1.

Results of the measurements of the fine particle dispersion film E according to Comparative Example 1 are described in Table 1-1, Table 1-2, and Table 1-3.

### (3) Fine particle dispersion sheet

### (3-1) Production of fine particle dispersion sheet

A fine particle dispersion powder according to Comparative Example 1 (hereinafter, abbreviated as "fine particle dispersion powder E") was obtained in the same manner as in Example 1 except that the above-described dispersant a was further added to the fine particle dispersion liquid E.

Subsequently, a fine particle dispersion sheet according to Comparative Example 1 (hereinafter, abbreviated as "fine particle dispersion sheet E") was obtained in the same manner as in Example 1 except that the above-described fine particle dispersion powder E was added to polycarbonate resin such that the transmittance at a wavelength of 1000 nm in a fine particle dispersion sheet (having a thickness of 2.0 mm) to be produced became less than 10%.

### (3-2) Optical properties of fine particle dispersion sheet

From a transmittance profile of the fine particle dispersion sheet E according to Comparative Example 1, the average value of the transmittance in UV-A (at a wavelength of 315-400 nm) was 44.5%, the visible light transmittance was 73.1%, the solar (ST) transmittance was 39.3%, and in the CIE 1976 L*a*b* color space, the a* value was -4.8, the b* value was -4.0, and the c* value was 6.2.

Results of the measurements of the fine particle dispersion sheet E according to Comparative Example 1 are described in Table 1-1, Table 1-2, and Table 1-3.

### (4) Laminated glass sheet

### (4-1) Production of laminated glass sheet

An infrared radiation-absorbing film (a polyvinyl butyral film which did not contain the iron oxyhydroxide fine particles but contained the infrared radiation-absorbing material fine particles dispersed therein) was produced in the same manner as in Example 1 except that the above-described fine particle dispersion powder E was added to the mixture according to Example 1 which was prepared such that the mass ratio between the polyvinyl butyral resin and the plasticizer became [polyvinyl butyral resin/plasticizer]=100/40, and a laminated glass sheet according to Comparative Example 1 (hereinafter, abbreviated as "laminated glass sheet E") was prepared in the same manner as in Example 1 except that this infrared radiation-absorbing film was used.

### (4-2) Optical properties of laminated glass sheet

From a transmittance profile of the laminated glass sheet E according to Comparative Example 1, the average value of the transmittance in UV-A (at a wavelength of 315-400 nm) was 39.6%, the visible light transmittance was 72.1%, the solar (ST) transmittance was 37.5%, and in the CIE 1976 L*a*b* color space, the a* value was -6.2, the b* value was -3.4, and the c* value was 7.1.

Results of the measurements of the laminated glass sheet E according to Comparative Example 1 are described in Table 1-1, Table 1-2, and Table 1-3.

### [Comparative Example 2]

### (1) Infrared radiation-absorbing material fine particle dispersion liquid

### (1-1) Production of infrared radiation-absorbing material fine particle dispersion liquid

An infrared radiation-absorbing material fine particle dispersion liquid according to Comparative Example 2 (hereinafter, abbreviated as "fine particle dispersion liquid F") was produced by mixing the above-described dispersion liquid A and dispersion liquid a such that the mass ratio between the FeOOH fine particles and the composite tungsten oxide fine particles became [FeOOH fine particles/composite tungsten oxide fine particles]=0.8.

### (1-2) Optical properties of infrared radiation-absorbing material fine particle dispersion liquid

The fine particle dispersion liquid F according to Comparative Example 2 was diluted with MIBK as appropriate, and placed in a 10 mm-thick rectangular container, and the spectral transmittance was measured.

From a transmittance profile of the fine particle dispersion liquid F which was measured by adjusting the dilution ratio such that the transmittance at a wavelength of 1000 nm became less than 10%, the average value of the transmittance in UV-A (at a wavelength of 315-400 nm) was 1.5%, the visible light transmittance was 70.9%, the solar (ST) transmittance was 34.1%, and in the CIE 1976 L*a*b* color space, the a* value was -6.8, the b* value was 28.3, and the c* value was 29.1.

Results of the measurements of the fine particle dispersion liquid F according to Comparative Example 2 are described in Table 1-1, Table 1-2, and Table 1-3.

### (2) Fine particle dispersion film

### (2-1) Production of fine particle dispersion film

A fine particle dispersion film according to Comparative Example 2 (hereinafter, abbreviated as "fine particle dispersion film F") was prepared in the same manner as in Example 1 except that the above-described fine particle dispersion liquid F was used.

### (2-2) Optical properties of fine particle dispersion film

From a transmittance profile of the fine particle dispersion film F according to Comparative Example 2 which was measured by adjusting the concentration of the fine particles of the fine particle coating liquid and the film thickness of the coating film such that the transmittance at a wavelength of 1000 nm became less than 10% in the fine particle dispersion film F according to Comparative Example 2, the average value of the transmittance in UV-A (at a wavelength of 315-400 nm) was 1.3%, the visible light transmittance was 63.2%, the solar (ST) transmittance was 30.5%, and in the CIE 1976 L*a*b* color space, the a* value was - 6.5, the b* value was 27.7, and the c* value was 28.5.

Results of the measurements of the fine particle dispersion film F according to Comparative Example 2 are described in Table 1-1, Table 1-2, and Table 1-3.

### (3) Fine particle dispersion sheet

### (3-1) Production of fine particle dispersion sheet

A fine particle dispersion powder according to Comparative Example 2 (hereinafter, abbreviated as "fine particle dispersion powder F") was obtained in the same manner as in Example 1 except that the above-described dispersant a was further added to the fine particle dispersion liquid F.

Subsequently, a fine particle dispersion sheet according to Comparative Example 2 (hereinafter, abbreviated as "fine particle dispersion sheet F") was obtained in the same manner as in Example 1 except that the above-described fine particle dispersion powder F was added to polycarbonate resin such that the transmittance at a wavelength of 1000 nm in a fine particle dispersion sheet (having a thickness of 2.0 mm) to be produced became less than 10%.

### (3-2) Optical properties of fine particle dispersion sheet

From a transmittance profile of the fine particle dispersion sheet F according to Comparative Example 2, the average value of the transmittance in UV-A (at a wavelength of 315-400 nm) was 1.3%, the visible light transmittance was 63.8%, the solar (ST) transmittance was 30.6%, and in the CIE 1976 L*a*b* color space, the a* value was -6.6, the b* value was 27.7, and the c* value was 28.5.

Results of the measurements of the fine particle dispersion sheet F according to Comparative Example 2 are described in Table 1-1, Table 1-2, and Table 1-3.

### (4) Laminated glass sheet

### (4-1) Production of laminated glass sheet

An infrared radiation-absorbing film (a polyvinyl butyral film in which the infrared radiation-absorbing material fine particles and the iron oxyhydroxide fine particles were dispersed) was produced in the same manner as in Example 1 except that the above-described fine particle dispersion powder F was added to the mixture according to Example 1 which was prepared such that the mass ratio between the polyvinyl butyral resin and the plasticizer became [polyvinyl butyral resin/plasticizer]=100/40, and a laminated glass sheet according to Comparative Example 2 (hereinafter, abbreviated as "laminated glass sheet F") was prepared in the same manner as in Example 1 except that this infrared radiation-absorbing film was used.

### (4-2) Optical properties of laminated glass sheet

From a transmittance profile of the laminated glass sheet F according to Comparative Example 2, the average value of the transmittance in UV-A (at a wavelength of 315-400 nm) was 1.2%, the visible light transmittance was 62.8%, the solar (ST) transmittance was 29.0%, and in the CIE 1976 L*a*b* color space, the a* value was -7.9, the b* value was 27.9, and the c* value was 29.0.

Results of the measurements of the laminated glass sheet F according to Comparative Example 2 are described in Table 1-1, Table 1-2, and Table 1-3.

**[Table 1-1]**

| | | Mass ratio FeOOH/C_{0.33}WO₃ |
|---|---|---|
| Example 1 | Fine particle dispersion liquid A | 0.03 |
| | Fine particle dispersion film A | |
| | Fine particle dispersion sheet A | |
| | Laminated glass sheet A | |
| | Fine particle dispersion liquid B | |
| Example 2 | Fine particle dispersion film B | 0.1 |
| | Fine particle dispersion sheet B | |
| | Laminated glass sheet B | |
| | Fine particle dispersion liquid C | |
| Example 3 | Fine particle dispersion film C | 0.3 |
| | Fine particle dispersion sheet C | |
| | Laminated glass sheet C | |
| Example 4 | Fine particle dispersion liquid D | 0.5 |
| | Fine particle dispersion film D | |
| | Fine particle dispersion sheet D | |
| | Laminated glass sheet D | |
| | Fine particle dispersion liquid E | |
| Comparative Example 1 | Fine particle dispersion film E | 0.0 |
| | Fine particle dispersion sheet E | |
| | Laminated glass sheet E | |
| | Fine particle dispersion liquid F | |
| Comparative Example 2 | Fine particle dispersion film F | 0.8 |
| | Fine particle dispersion sheet F | |
| | Laminated glass sheet F | |

**[Table 1-2]**

| Solar Transmittance [ST (film)]: in accordance with JIS A5759 | | | | |
|---|---|---|---|---|
| | | 1000 nm | Transmittance (%) Average in UV-A (315-400 nm) | Visible light transmittance (%) |
| Example 1 | Fine particle dispersion liquid A | 8.7 | 49.3 | 80.6 |
| | Fine particle dispersion film A | 7.8 | 39.6 | 71.9 |
| | Fine particle dispersion sheet A | 7.8 | 38.9 | 72.5 |
| | Laminated glass sheet A | 6.2 | 34.7 | 71.4 |
| Example 2 | Fine particle dispersion liquid B | 8.4 | 33.6 | 79.3 |
| | Fine particle dispersion film B | 7.5 | 27.2 | 70.7 |
| | Fine particle dispersion sheet B | 7.5 | 26.8 | 71.3 |
| | Laminated glass sheet B | 5.9 | 24.2 | 70.3 |
| Example 3 | Fine particle dispersion liquid C | 8.5 | 15.9 | 77.4 |
| | Fine particle dispersion film C | 7.6 | 13.1 | 69.0 |
| | Fine particle dispersion sheet C | 7.6 | 13.0 | 69.6 |
| | Laminated glass sheet C | 6.0 | 12.0 | 68.6 |
| Example 4 | Fine particle dispersion liquid D | 8.3 | 5.5 | 74.2 |
| | Fine particle dispersion film D | 7.5 | 4.6 | 66.2 |
| | Fine particle dispersion sheet D | 7.5 | 4.6 | 66.8 |
| | Laminated glass sheet D | 5.9 | 4.3 | 65.8 |
| Comparative Example 1 | Fine particle dispersion liquid E | 8.9 | 56.6 | 81.3 |
| | Fine particle dispersion film E | 8.0 | 45.3 | 72.5 |
| | Fine particle dispersion sheet E | 8.0 | 44.5 | 73.1 |
| | Laminated glass sheet E | 6.3 | 39.6 | 72.1 |
| Comparative Example 2 | Fine particle dispersion liquid F | 8.5 | 1.5 | 70.9 |
| | Fine particle dispersion film F | 7.7 | 1.3 | 63.2 |
| | Fine particle dispersion sheet F | 7.7 | 1.3 | 63.8 |
| | Laminated glass sheet F | 6.0 | 1.2 | 62.8 |

**[Table 1-3]**

| | | ST (%) | a* | b* | c* |
|---|---|---|---|---|---|
| Example 1 | Fine particle dispersion liquid A | 43.2 | -5.1 | -3.5 | 6.2 |
| | Fine particle dispersion film A | 38.4 | -5.0 | -2.7 | 5.7 |
| | Fine particle dispersion sheet A | 38.6 | -5.1 | -2.8 | 5.8 |
| | Laminated glass sheet A | 36.8 | -6.5 | -2.2 | 6.9 |
| Example 2 | Fine particle dispersion liquid B | 41.5 | -5.8 | -0.1 | 5.8 |
| | Fine particle dispersion film B | 36.9 | -5.7 | 0.6 | 5.7 |
| | Fine particle dispersion sheet B | 37.1 | -5.7 | 0.5 | 5.7 |
| | Laminated glass sheet B | 35.4 | -7.1 | 1.1 | 7.2 |
| Example 3 | Fine particle dispersion liquid C | 39.3 | -7.6 | 6.9 | 10.2 |
| | Fine particle dispersion film C | 35.0 | -7.2 | 7.2 | 10.2 |
| | Fine particle dispersion sheet C | 35.1 | -7.3 | 7.1 | 10.2 |
| | Laminated glass sheet C | 33.5 | -8.6 | 7.6 | 11.5 |
| Example 4 | Fine particle dispersion liquid D | 36.5 | -7.5 | 16.6 | 18.2 |
| | Fine particle dispersion film D | 32.6 | -7.1 | 16.6 | 18.0 |
| | Fine particle dispersion sheet D | 32.7 | -7.2 | 16.5 | 18.0 |
| | Laminated glass sheet D | 31.1 | -8.4 | 16.8 | 18.8 |
| Comparative Example 1 | Fine particle dispersion liquid E | 44.1 | -4.8 | -4.8 | 6.8 |
| | Fine particle dispersion film E | 39.1 | -4.7 | -3.9 | 6.1 |
| | Fine particle dispersion sheet E | 39.3 | -4.8 | -4.0 | 6.2 |
| | Laminated glass sheet E | 37.5 | -6.2 | -3.4 | 7.1 |
| Comparative Example 2 | Fine particle dispersion liquid F | 34.1 | -6.8 | 28.3 | 29.1 |
| | Fine particle dispersion film F | 30.5 | -6.5 | 27.7 | 28.5 |
| | Fine particle dispersion sheet F | 30.6 | -6.6 | 27.7 | 28.5 |
| | Laminated glass sheet F | 29.0 | -7.9 | 27.9 | 29.0 |

### [Confirmation]

### (1) Examples 1 to 4

### (1-1) Visible light transmittance

The visible light transmittances of the infrared radiation-absorbing material fine particle dispersions body (the fine particle dispersion films, the fine particle dispersion sheets, and the laminated glass sheets) according to Examples 1 to 4 fell in a range of 65.8% (the laminated glass sheet D of Example 4) to 72.5% (the fine particle dispersion sheet A of Example 1), and it was confirmed that the infrared radiation-absorbing material fine particle dispersions body according to Examples 1 to 4 had high transmittance for light in the visible light region.

### (1-2) Solar (ST) transmittance

The solar (ST) transmittances of the infrared radiation-absorbing material fine particle dispersions body (the fine particle dispersion films, the fine particle dispersion sheets, and the laminated glass sheets) according to Examples 1 to 4 fell in a range of 31.1% (the laminated glass sheet D of Example 4) to 38.6% (the fine particle dispersion sheet A of Example 1), and it was also confirmed that the infrared radiation-absorbing material fine particle dispersions body according to Examples 1 to 4 had absorbance in the near-infrared region.

### (1-3) a* value, b* value, and c* value in CIE 1976 L*a*b* color space

When the color tones of the infrared radiation-absorbing material fine particle dispersions body (the fine particle dispersion films, the fine particle dispersion sheets, and the laminated glass sheets) according to Examples 1 to 4 were evaluated in the L*a*b* color system, a* fell in a range of -20 or more and 0 or less, and b* fell in a range of -3.0 or more and 20 or less, and it was confirmed that the color tones of the infrared radiation-absorbing material fine particle dispersions body according to Examples 1 to 4 were adjusted to a neutral color between blue and bronze.

In particular, when the color tones of the infrared radiation-absorbing material fine particle dispersions body (the fine particle dispersion films, the fine particle dispersion sheets, and the laminated glass sheets) according to Examples 1 to 2 in which the mass ratio between the iron oxyhydroxide (FeOOH) fine particles and the composite tungsten oxide fine particles [iron oxyhydroxide (FeOOH) fine particles/composite tungsten oxide fine particles] was set to 0.1 or less were evaluated in the L*a*b* color system, b* was 5 or less, and further the color tones fell in the above-mentioned requirements that enable adjustment of an infrared radiation-absorbing material fine particle dispersion body having a neutral color tone excellent in chroma, that is, a* fell in a range of -7.5 or more and 0 or less, b* fell in a range of - 3.0 or more and 10 or less, and c* fell in a range of 10 or less. Hence, it was confirmed that the color tones were adjusted to a neutral color excellent in chroma between blue and bronze.

### (2) Comparative Examples 1 to 2

### (2-1) Visible light transmittance

The visible light transmittances of the infrared radiation-absorbing material fine particle dispersions body (the fine particle dispersion films, the fine particle dispersion sheets, and the laminated glass sheets) according to Comparative Examples 1 to 2 fell in a range of 62.8% (the laminated glass sheet F of Comparative Example 2) to 73.1% (the fine particle dispersion sheet E of Comparative Example 1), and it was confirmed that the infrared radiation-absorbing material fine particle dispersions body according to Comparative Examples 1 to 2 had transmittances substantially equal to those of Examples for light in the visible light region.

### (2-2) Solar (ST) transmittance

The solar (ST) transmittances of the infrared radiation-absorbing material fine particle dispersions body (the fine particle dispersion films, the fine particle dispersion sheets, and the laminated glass sheets) according to Comparative Examples 1 to 2 fell in a range of 29.0% (the laminated glass sheet F of Comparative Example 2) to 39.3% (the fine particle dispersion sheet E of Comparative Example 1), and it was confirmed that the infrared radiation-absorbing material fine particle dispersions body according to Comparative Examples 1 to 2 also had absorbance in the near-infrared region.

### (2-3) a* value, b* value, and c* value in CIE 1976 L*a*b* color space

(2-3-1) When the color tone of the infrared radiation-absorbing material fine particle dispersion body (the fine particle dispersion film, the fine particle dispersion sheet, and the laminated glass sheet) according to Comparative Example 1 was evaluated in the L*a*b* color system, both a* and b* were on the "minus" side, which indicated a blue color due to the composite tungsten oxide fine particles, and it was confirmed that the color tone was not adjusted to a neutral color between blue and bronze.

(2-3-2) When the color tone of the infrared radiation-absorbing material fine particle dispersion body (the fine particle dispersion film, the fine particle dispersion sheet, and the laminated glass sheet) according to Comparative Example 2 was evaluated in the L*a*b* color system, b* exceeded 20, indicating strong yellowishness, and it was confirmed that the color tone was not adjusted to a neutral color between blue and bronze as in the case of Comparative Example 1.

### POSSIBILITY OF INDUSTRIAL APPLICATION

The infrared radiation-absorbing material fine particle dispersion liquid and the infrared radiation-absorbing material fine particle dispersion body of the present invention have high transmittance for light in the visible light region and have absorbance in the near-infrared region, and can be adjusted to a neutral color between blue and bronze, thus having industrial applicability to be used as window members for automobiles, trains, buildings, and the like.

## Claims

1. An infrared radiation-absorbing material fine particle dispersion liquid comprising infrared radiation-absorbing material fine particles and iron oxyhydroxide (FeOOH) fine particles in a liquid medium, wherein
the infrared radiation-absorbing material fine particles are formed of composite tungsten oxide fine particles which are represented by a general formula M_{Y}WO_{Z} (where the element M is one or more elements selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, 0.001≤Y≤1.0, and 2.2≤Z≤3.0), and which have a hexagonal crystal structure, and
a mass ratio between the iron oxyhydroxide (FeOOH) fine particles and the composite tungsten oxide fine particles in the liquid medium [iron oxyhydroxide (FeOOH) fine particles/composite tungsten oxide fine particles] is 0.01 or more and 0.5 or less.

2. The infrared radiation-absorbing material fine particle dispersion liquid according to claim 1, wherein a particle size of the composite tungsten oxide fine particles is 1 nm or more and 200 nm or less.

3. The infrared radiation-absorbing material fine particle dispersion liquid according to claim 1, wherein a particle size of the iron oxyhydroxide (FeOOH) fine particles is 1 nm or more and 200 nm or less.

4. The infrared radiation-absorbing material fine particle dispersion liquid according to claim 1, wherein the liquid medium is one or a mixture of two or more selected from water, an organic solvent, a vegetable oil, a vegetable oil-derived compound, a petroleum-based solvent, an oil and/or fat, a liquid resin, and a liquid plasticizer for plastic.

5. The infrared radiation-absorbing material fine particle dispersion liquid according to any one of claims 1 to 4, wherein when the infrared radiation-absorbing material fine particle dispersion liquid is evaluated in an L*a*b* color system, a* is -20 or more and 0 or less, and b* is -3.5 or more and 20 or less.

6. An infrared radiation-absorbing material fine particle dispersion body comprising infrared radiation-absorbing material fine particles and iron oxyhydroxide (FeOOH) fine particles in a solid medium, wherein
the infrared radiation-absorbing material fine particles are formed of composite tungsten oxide fine particles which are represented by a general formula M_{Y}WO_{Z} (where the element M is one or more elements selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, 0.001≤Y≤1.0, and 2.2≤Z≤3.0), and which have a hexagonal crystal structure, and
a mass ratio between the iron oxyhydroxide (FeOOH) fine particles and the composite tungsten oxide fine particles in the solid medium [iron oxyhydroxide (FeOOH) fine particles/composite tungsten oxide fine particles] is 0.01 or more and 0.5 or less.

7. The infrared radiation-absorbing material fine particle dispersion body according to claim 6, wherein a particle size of the composite tungsten oxide fine particles is 1 nm or more and 200 nm or less.

8. The infrared radiation-absorbing material fine particle dispersion body according to claim 6, wherein a particle size of the iron oxyhydroxide (FeOOH) fine particles is 1 nm or more and 200 nm or less.

9. The infrared radiation-absorbing material fine particle dispersion body according to claim 6, wherein the solid medium is a resin or a metal alkoxide.

10. The infrared radiation-absorbing material fine particle dispersion body according to any one of claims 6 to 9, wherein when the infrared radiation-absorbing material fine particle dispersion is evaluated in an L*a*b* color system, a* is -20 or more and 0 or less, and b* is -3.0 or more and 20 or less.
